# EUROPEAN PATENT APPLICATION

(11) **EP 4 559 876 A2**
(43) Date of publication of application: **28.05.2025**
(21) Application number: 24206452.5
(22) Date of filing: 07.09.2020
(51) Int. Cl.: C01G 53/00

(54) **POSITIVE ELECTRODE ACTIVE MATERIAL FOR SODIUM ION BATTERY, SODIUM ION BATTERY MADE FROM ACTIVE MATERIAL, BATTERY MODULE, BATTERY PACK AND APPARATUS**

(30) Priority: 27.09.2019 CN 201910922651
(62) Divisional of application: 20867772.4
(71) Applicant: Contemporary Amperex Technology (Hong Kong) Limited, Central, Central And Western District (HK)
(72) Inventor: HUANG, Liting, Ningde, 352100 (CN); GUO, Yongsheng, Ningde, 352100 (CN); LIANG, Chengdu, Ningde, 352100 (CN); LAN, Jiadian, Ningde, 352100 (CN); LIN, Wenguang, Ningde, 352100 (CN)
(74) Representative: Gong, Jinping

(57) **Abstract**

The present disclosure relates to a positive electrode active material for a sodium ion battery, a sodium ion battery made from the same, a battery module, a battery pack and an apparatus. Specifically, the positive electrode active material for a sodium ion battery mainly includes an O3-phase layered metal oxide having the following molecular formula: NaₐM_{b}Ni_{c}Fe_{d}MnₑO_{2±δ} (Formula I), in which M is a metal cation different from Ni, Fe and Mn; 0.67 < a < 1.1; 0 < b < 0.25, optionally 0.05 < b < 0.15; 0 < c < 0.3, optionally 0.05 < c < 0.25; 0 < b+c < 0.55, 0.45 < d+e <1, and b+c+d+e = 1; and 0 ≤ δ ≤ 0.1, wherein the metal cation is at least one selected from Li⁺, Cu²⁺, Zn²⁺, Co²⁺ and Ti⁴⁺.

## Description

### CROSS-REFERENCE TO RELATED APPLICATION

This application claims priority to Chinese Patent Application No. 201910922651.9 filed on September 27, 2019, entitled "POSITIVE ELECTRODE ACTIVE MATERIAL FOR SODIUM ION BATTERY, SODIUM ION BATTERY MADE FROM SAME, BATTERY MODULE, BATTERY PACK AND APPARATUS", which is incorporated herein by reference in its entirety.

### TECHNICAL FIELD

The present disclosure belongs to the field of electrochemistry, and relates to a positive electrode active material for a sodium ion battery, and in particular, to a high-voltage resistant positive electrode active material for a sodium ion battery. The present disclosure further relates to a sodium ion battery made from the aforementioned positive active material, a battery module, a battery pack and an apparatus.

### BACKGROUND

Since the 1970s, researchers have turned their attention to the rechargeable sodium ion battery technology. Nevertheless, due to the successful commercialization of lithium ion batteries, the research and development of sodium ion batteries have been at a standstill for a long time. Since 2010, the lithium ion battery technology has faced challenges from various aspects, such as high energy density requirement, cost, performance, and safety, and the rechargeable sodium ion battery technology has once again become the focus of research in the field of batteries. At present, for the sodium ion battery technology, there has been explosive development from the development of positive and negative electrode materials, electrolytes and separators to the design of novel chemical/electrochemical systems.

Similar to lithium ion batteries, the key factor restricting the performance of a sodium ion battery is its positive electrode material. Among the widely studied positive electrode materials such as oxides, fluorides, sulfides, phosphates, pyrophosphates, metal-organic framework/metal hexacyanides and organic compounds, transition metal oxide positive electrode materials having a layered structure have received extensive attention and become a potential positive electrode material for a sodium ion battery for their high theoretical capacities, high densities, low costs, and ease of preparation.

### SUMMARY

A first aspect of the present disclosure provides a positive electrode active material for a sodium ion battery, which mainly includes an O3-phase layered metal oxide having the following molecular formula:

NaₐM_{b}Ni_{c}Fe_{d}MnₑO_{2±δ} (Formula I)

in which
M is a metal cation different from Ni, Fe and Mn; 0.67 < a < 1.1; 0 < b < 0.25, optionally 0.05 < b < 0.15; 0 < c < 0.3, optionally 0.05 < c < 0.25; 0 < b+c < 0.55; 0.45 < d+e < 1, and b+c+d+e = 1; and 0 ≤ δ ≤ 0.1,
wherein the metal cation is at least one selected from Li⁺, Cu²⁺, Zn²⁺, Co²⁺ and Ti⁴⁺.

In the positive electrode active material for a sodium ion battery according to the present disclosure, the O3-phase layered metal oxide doped with a particular metal cation has high structural stability, and when used at a high voltage, can not only maintain good cycle performance but also exhibit stable electrical properties. The inventors surprisingly found that when doped with at least one of Li⁺, Cu²⁺, Zn²⁺, Co²⁺ and Ti⁴⁺, an O3-phase layered metal oxide having a high ratio of I₀₀₃/I₁₀₄ can be obtained, which exhibits a better structural order and a stronger binding of metal-oxygen (MO) bond. Additionally/alternatively, the O3-phase layered metal oxide has a good crystal structure, which is assigned to a hexagonal crystal system with a space group specified by R3m, with a high ratio of crystal lattice parameter c to crystal lattice parameter a. This material exhibits excellent crystallinity and has the optimal layered structure. Metal oxides having such a structure, when used at a high voltage, can achieve good cycle performance and exhibit stable electrical performances.

In the positive electrode active material for a sodium ion battery according to the first aspect, the O3-phase layered metal oxide has a ratio of I(003)/I(104) of ≥ 0.62, optionally between 0.67 and 1.5, in an X-ray diffraction spectrum, where I(003) denotes a peak intensity of the (003) crystal plane of the O3-phase layered metal oxide, while I(104) denotes a peak intensity of the

(104) crystal plane of the O3-phase layered metal oxide, and I(003)/I(104) reflects an antisite defect of sodium metal cations in the O3-phase layered metal oxide. Thus, the interaction between the transition metal and oxygen (TM-O) of the O3-phase layered metal oxide is enhanced.

In the positive electrode active material for a sodium ion battery according to the first aspect, the O3-phase layered metal oxide is assigned to a hexagonal crystal system with a space group specified by R3m, where a ratio of crystal lattice parameter c to crystal lattice parameter a is greater than or equal to 5, optionally greater than or equal to 5.5. Thus, the crystallization behavior of the O3-phase layered metal oxide is enhanced.

In the positive electrode active material for a sodium ion battery according to the first aspect, the O3-phase layered metal oxide has the ratio of I(003)/I(104) of ≥ 0.62, optionally between 0.67 and 1.5, in the X-ray diffraction spectrum, and the O3-phase layered metal oxide is assigned to a hexagonal crystal system with a space group specified by R3m, where a ratio of crystal lattice parameter c to crystal lattice parameter a is greater than or equal to 5, optionally greater than or equal to 5.5. Thus, such an O3-phase layered metal oxide has particularly excellent structural stability, and therefore exhibits particularly excellent electrical performances and dynamic properties when used at a high voltage.

In the positive electrode active material for a sodium ion battery according to the first aspect, primary particles of the O3-phase layered metal oxide have a flaky structure. Thus, the resulting positive electrode active material has ideal structural stability and electrical performances.

In the positive electrode active material for a sodium ion battery according to the first aspect, the primary particles have a grain size between 0.05 and 15 microns, optionally between 0.1 and 5 microns. Thus, the resulting positive electrode active material has ideal structural stability and electrical performances.

In the positive electrode active material for a sodium ion battery according to the first aspect, the positive electrode active material has a compacted density between 1.5 g/cm3 and 4.5 g/cm3, optionally between 2.5 g/cm3 and 4 g/cm3, under a pressure of 8 tons. Thus, the resulting positive electrode active material has ideal structural stability and electrical performances.

In the positive electrode active material for a sodium ion battery according to the first aspect, the positive electrode active material is obtained by the following steps: i) coprecipitating a Ni source and a Mn source in the presence of a complexing agent and a precipitating agent to obtain a Ni-Mn metal salt precursor, and ii) carrying out a solid phase sintering to the Ni-Mn metal salt precursor from the step i) together with a Na source, a Fe source and an M source, so as to obtain the positive electrode active material including the O3-phase layered metal oxide. Optionally, the sintering is carried out at a temperature of 850°C to 920°C for 15 to 25 hours. Thus, a positive electrode active material having excellent electrical performances and cycle performance is obtained.

In the positive electrode active material for a sodium ion battery according to the first aspect, the sintering is carried out at a temperature of 850°C to 920°C, optionally 890°C to 910°C, further optionally 895°C to 905°C, and still further optionally 900°C. Thus, a positive electrode active material exhibiting an appropriate crystallization behavior is obtained.

In the positive electrode active material for a sodium ion battery according to the first aspect, the sintering is carried out for a period of 15 to 25 hours, preferably 17 to 22 hours, more preferably 19 to 21 hours, and most preferably 20 hours. Thus, a positive electrode active material having excellent electrochemical performances is obtained.

A second aspect of the present disclosure provides a sodium ion battery, including a positive electrode plate, a negative electrode plate, a separator interposed between the positive electrode plate and the negative electrode plate, and an electrolyte, wherein the positive electrode plate includes a positive electrode current collector, and a positive electrode active material layer disposed on at least one side of the positive electrode current collector; the positive electrode active material is the positive electrode active material according to the present disclosure, and the battery has a charge cut-off voltage of 4.2 V or higher.

In the sodium ion battery according to the second aspect of the present disclosure, the battery has an initial specific discharge capacity of 120 mAh/g at a voltage of 2.0 V to 4.2 V, and a capacity retention of 87% or higher after 100 cycles at 1 C.

A third aspect of the present disclosure provides a sodium ion battery, including a positive electrode plate, a negative electrode plate, a separator interposed between the positive electrode plate and the negative electrode plate, and an electrolyte, wherein the positive electrode plate includes a positive electrode current collector, and a positive electrode active material layer disposed on at least one side of the positive electrode current collector; the positive electrode active material is the positive electrode active material according to the present disclosure, and the battery has a charge cut-off voltage of 4.5 V or higher.

In the sodium ion battery according to the third aspect of the present disclosure, the battery has an initial specific discharge capacity of 150 mAh/g at a voltage of 2.0 V to 4.5 V, and a capacity retention of 80% or higher after 100 cycles at 1 C.

A fourth aspect of the present disclosure provides a battery module, including the sodium ion battery according to the second or third aspect of the present disclosure.

A fifth aspect of the present disclosure provides a battery pack, including the battery module according to the fourth aspect of the present disclosure.

A sixth aspect of the present disclosure provides an apparatus, including the sodium ion battery according to the second or third aspect of the present disclosure, wherein the sodium ion battery is used as a power source or an energy storage unit of the apparatus; optionally, the apparatus comprises an electric vehicle, a hybrid electric vehicle, a plug-in hybrid electric vehicle, an electric bicycle, an electric scooter, an electric golf cart, an electric truck, an electric ship, or an energy storage system.

The battery module, the battery pack and the apparatus provided in the present disclosure each include the sodium ion battery provided in the present disclosure, and therefore have at least the same advantages with the sodium ion battery.

Details of one or more embodiments of the present disclosure will be set forth in the following description. Other features, objectives and advantages of the present disclosure will become clear from the description and claims.

### Definitions

When describing the contents of the present disclosure, "a", "an", "the", "at least one", or "one or more" is used as including both singular and plural forms, unless otherwise specified or clearly contradictory to the context.

Where a method is described as including or comprising specific process steps, it is expected that the method does not exclude optional process steps that are not explicitly specified, and the method may also be constituted or composed of the process steps involved.

For the sake of brevity, only some numerical ranges are explicitly disclosed herein. However, any lower limit may be combined with any upper limit to form a range that is not explicitly described. In addition, lower limit may be combined with other lower limits to form unspecified ranges, and any upper limit may be combined with any other upper limit to form an unspecified range. Furthermore, although not explicitly specified, each point or a single numerical value between the endpoints of a range is included within the range. Thus, each point or a single numerical value as a lower limit or upper limit can be combined with any other point or single numerical value as a counterpart lower limit or upper limit to form a range that is not explicitly specified.

In the context concerning the O3-phase layered metal oxide, I(003)/I(104) is used to reflect an antisite defect of sodium metal cation in the O3-phase layered metal oxide, wherein I(003) denotes a peak intensity of the positive electrode active material at the (003) crystal plane, while I(104) denotes a peak intensity at the (104) crystal plane. Generally, the larger the ratio of I(003)/I(104), the lower the antisite defect of sodium metal cation in the O3-phase layered metal oxide, meaning that the higher the structural order of the O3-phase layered metal oxide, the more stable the structure.

In the context concerning the O3-phase layered metal oxide, "ratio of crystal lattice parameter c to crystal lattice parameter a" is used to characterize the crystal structure of the O3-phase layered metal oxide. Generally, when the ratio of c/a is greater than 5, the material is considered to be well crystallized with a layered structure. The larger the ratio, the higher the proportion of the layered structure in the material, and the better the layered structure formed.

In the context concerning the O3-phase layered metal oxide, "hexagonal crystal system" refers to a crystal system structure having the following crystal lattice parameters, where crystal lattice parameter a=b≠c, and α=β=90°, γ=120°.

In the context concerning the O3-phase layered metal oxide, "primary particles" refer to the crystal particles of the O3-phase layered metal oxide, which are different from the particles (secondary particles) formed by agglomeration of crystal particles.

The terms "optional" and "optionally" refer to embodiments of the invention that may afford certain benefits, under certain circumstances. However, other embodiments may also be possible, under the same or other circumstances. Furthermore, the recitation of one or more optional embodiments does not imply that other embodiments are not useful, and is not intended to exclude other embodiments from the scope of the invention.

### DESCRIPTION OF THE DRAWINGS

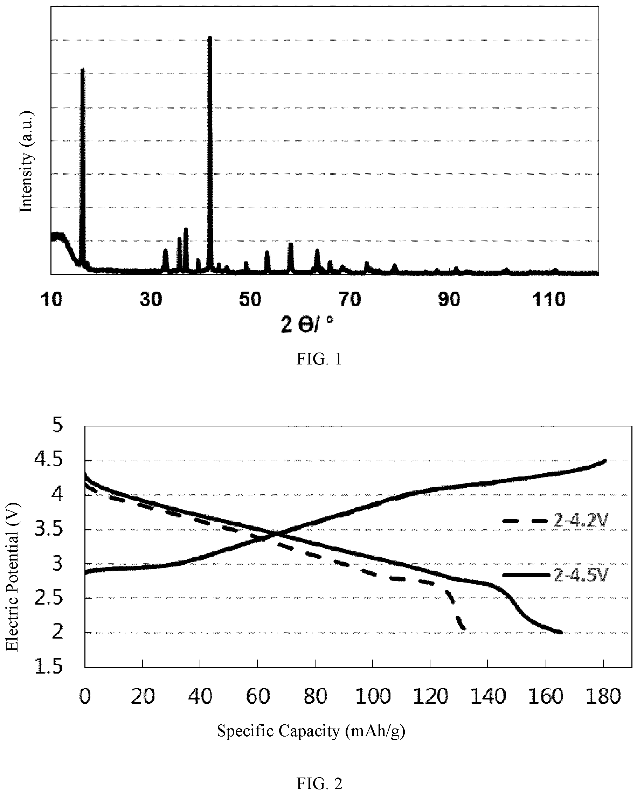

FIG. 1 illustrates an X-ray diffraction spectrum of a positive electrode active material for a sodium ion battery according to Example 5 of the present disclosure.
FIG. 2 illustrates initial charge-discharge curves of a button battery made from the positive electrode active material for a sodium ion battery according to Example 5 of the present disclosure at different voltages.
FIG. 3 illustrates cycle performance of a button battery made from the positive electrode active material for a sodium ion battery according to Example 5 of the present disclosure at different voltages.
FIG. 4 is a three-dimensional diagram of a sodium ion battery according to an embodiment.
FIG. 5 is an exploded view of FIG. 4.
FIG. 6 is a three-dimensional diagram of a battery module according to an embodiment.
FIG. 7 is a three-dimensional diagram of a battery pack according to an embodiment.
FIG. 8 is an exploded view of FIG. 7.
FIG. 9 is a schematic diagram of an apparatus with a sodium ion battery as a power source according to an embodiment.

### List of Reference Numerals:

1 battery pack
2 upper case body
3 lower case body
4 battery module
5 sodium ion battery
51 casing
52 electrode assembly
53 top cap assembly

### DETAILED DESCRIPTION

The technical solutions in examples of the present disclosure will be described clearly and completely in conjunction with the accompanying drawings in the examples of the present disclosure. Apparently, the described examples are some rather than all of the examples of the present disclosure. All technical solutions derived from the examples of the present disclosure through conventional modification or variation made to the present disclosure by those of ordinary skill in the art shall fall within the protection scope of the present disclosure.

In the first aspect, the present disclosure provides a positive electrode active material for a sodium ion battery, which mainly includes an O3-phase layered metal oxide having the following molecular formula:

NaₐM_{b}Ni_{c}Fe_{d}MnₑO_{2±δ} (Formula I)

in which M is a metal cation different from Ni, Fe and Mn; 0.67 < a < 1.1; 0 < b < 0.25, optionally 0.05 < b < 0.15; 0 < c < 0.3, optionally 0.05 < c < 0.25; 0 < b+c < 0.55, 0.45 < d+e < 1, and b+c+d+e=1; and 0 ≤ δ ≤ 0.1, wherein the metal cation is at least one selected from Li⁺, Cu²⁺, Zn²⁺, Co²⁺ and Ti⁴⁺.

An oxide having a layered structure is mainly used as a positive electrode active material in the production of a sodium ion battery. The Oxide having the layered structure can be classified into P2-phase and O3-phase layered metal oxides according to their stable phase structures, where O3-phase NaxMO₂ (0.67 < X ≤1; M is one or more metals selected from Fe, Mn and Ni) may have great advantages in both aspects of specific capacity and specific energy and thus be considered as potential positive electrode materials for a sodium ion battery. However, there is no O3-phase layered transition metal oxide positive electrode material that still has high specific capacity and long service life at an acceptable cost and is suitable for commercialization at present. This is mainly because an O3-phase layered transition metal oxide positive electrode material is prone to irreversible phase transition in a high voltage zone (> 4.1 V) in a relevant electrolyte system. This poor resistance to high-voltage makes the material prone to structural distortion during the charging and discharging processes in the high voltage zone, resulting in poor long-term cycle stability of the material. To improve the cycle performance of a positive electrode material including an O3-phase layered transition metal oxide, the charge-discharge voltage of the material has to be reduced at the expense of the specific capacity of the positive electrode material, which also leads to the reduction of the commercial value of this type of material. So far, there is no O3-phase layered metal oxide positive electrode active material that is suitable for a high-voltage sodium ion battery and can have the specific capacity and cycle stability of the battery both in the battery industry.

In an embodiment of the present disclosure, the positive electrode active material for a sodium ion battery mainly includes an O3-phase layered metal oxide. In other words, the O3-phase layered metal oxide is a main component of the positive electrode active material. In one embodiment of the present disclosure, the positive electrode active material for a sodium ion battery includes 90wt% or higher, optionally 95wt% or higher, more preferably 98wt% or higher, and further optionally 99wt% or higher of an O3-phase layered metal oxide based on the total weight of the positive electrode active material. Most optionally, the positive electrode active material for a sodium ion battery is consisted of an O3-phase layered metal oxide.

The inventors of the present disclosure surprisingly found that in the positive electrode active material for a sodium ion battery according to the present disclosure, the O3-phase layered metal oxide that is doped with a particular metal cation has high structural stability, and when used at a high voltage, can exhibit not only stable electrical performances but also significantly improved cycle performance. Without being bound by the following theory, it is supposed that the reason is that when the O3-phase sodium-nickel-manganese-iron oxide is doped and modified with a specific type of metal element, the irreversible phase transition (P3-P3') of this material in a high voltage zone (e.g. > 4.1 V) can be effectively inhibited, which ensures the structural stability of the material during the charging and discharging processes, thereby achieving a better balance between capacity and cycle performance. The irreversible phase transition (P3-P3') in the high voltage zone is mainly induced by Joule-Thomson (J-T) effect of Ni³⁺. In the O3-phase layered metal oxide according to the present disclosure, the doping metal enhances transition metal and oxygen (TM-O) interaction, particularly Ni-O interaction, and can effectively inhibit the J-T effect of Ni³⁺, thereby achieving the purpose of inhibiting the irreversible phase transition in the high voltage zone.

In an embodiment of the present disclosure, the metal cation suitable for doping with the O3-phase layered metal oxide is at least one selected from Li⁺, Cu²⁺, Zn²⁺, Co²⁺ and Ti⁴⁺. The metal cation particularly suitable for doping with the O3-phase layered metal oxide is Li⁺. The doping of such specific types of metal cations is vital to improve the structural stability of the metal oxide. The inventors of the present disclosure surprisingly found that the O3-phase layered metal oxide doped with such specific types of metal cations has improved structural stability as compared with the O3-phase layered metal oxide doped with other metal cations (e.g. Mg²⁺) disclosed in the related art. As a result, the O3-phase layered metal oxide obtained according to the present disclosure exhibits significantly superior electrical performances and dynamic properties when used at a high voltage.

Doping with the above-mentioned specific types of metal cations enhances the transition metal and oxygen (TM-O) interaction in the O3-phase layered metal oxide, which is reflected by the parameter I(003)/I(104). In some embodiments of the present disclosure, the O3-phase layered metal oxide has a ratio of I(003)/I(104) of ≥ 0.62 in an X-ray diffraction spectrum, wherein I(003) denotes a peak intensity of the (003) crystal plane of the O3-phase layered metal oxide, while I(104) denotes a peak intensity of the (104) crystal plane of the O3-phase layered metal oxide, and I(003)/I(104) reflects an antisite defect of sodium metal cation in the O3-phase layered metal oxide. Optionally, the ratio of I(003)/I(104) of the O3-phase layered metal oxide in the X-ray diffraction spectrum is greater than or equal to 0.7, optionally greater than or equal to 0.75, more optionally greater than or equal to 0.8, further optionally greater than or equal to 0.85, and still further optionally greater than or equal to 0.9, but not higher than 1.5, 1.4, 1.3, 1.25, or 1.2.

Moreover, doping with the above-mentioned specific types of metal cations further enhances the crystallization behavior of the O3-phase layered metal oxide, which is reflected by a ratio of crystal lattice parameter c to crystal lattice parameter a. In some embodiments of the present disclosure, the O3-phase layered metal oxide is assigned to a hexagonal crystal system with a space group specified by R3m, where a ratio of crystal lattice parameter c to crystal lattice parameter a is greater than or equal to 5, optionally greater than or equal to 5.5. Optionally, the ratio of c/a of the O3-phase layered metal oxide is greater than or equal to 5.6, or greater than or equal to 5.7, or greater than or equal to 5.8, or greater than or equal to 5.9, or greater than or equal to 6.0, or greater than or equal to 6.1, or greater than or equal to 6.2, or greater than or equal to 6.3, or greater than or equal to 6.4, or greater than or equal to 6.5, or greater than or equal to 6.6, or greater than or equal to 6.7, or greater than or equal to 6.8, or greater than or equal to 6.9, or greater than or equal to 7.0, but not higher than 9.0, 8.5 or 8.0.

In some alternative embodiments of the present disclosure, the O3-phase layered metal oxide has a ratio of I(003)/I(104) of ≥ 0.62, optionally between 0.67 and 1.5, in the X-ray diffraction spectrum, and the O3-phase layered metal oxide is assigned to a hexagonal crystal system with the space group specified by R3m, where a ratio of crystal lattice parameter c to crystal lattice parameter a is greater than or equal to 5, optionally greater than or equal to 5.5. Such an O3-phase layered metal oxide has particularly excellent structural stability, and therefore exhibits particularly excellent electrical performances and dynamic properties when used at a high voltage.

Optionally, according to some embodiments of the present disclosure, primary particles of the O3-phase layered metal oxide have a flaky structure. In some embodiments of the present disclosure, the primary particles have a grain size between 0.05 and 15 microns, optionally between 0.1 and 5 microns, such as 0.2 micron, 0.3 micron, 0.4 micron, 0.5 micron, 0.6 micron, 0.7 micron, 0.8 micron, 0.9 micron, 1 micron, 1.5 microns, 2 microns, 2.5 microns, 3 microns, 3.5 microns, 4 microns, 4.5 microns, or 4.8 microns.

Optionally, according to some embodiments of the present disclosure, the positive electrode active material for a sodium ion battery has a compacted density between 1.5 g/cm³ and 4.5 g/cm³, optionally between 2.5 g/cm³ and 4 g/cm³, under a pressure of 8 tons.

In some embodiments of the present disclosure, the positive electrode active material is obtained by the following steps:
i) coprecipitating a Ni source and a Mn source in the presence of a complexing agent and a precipitating agent to obtain a Ni-Mn metal salt precursor, and
ii) carrying out a solid phase sintering to the Ni-Mn metal salt precursor from the step i) together with a Na source, a Fe source and an M source, so as to obtain the positive electrode active material including the O3-phase layered metal oxide.

The inventors of the present disclosure found that during the preparation process of a positive electrode active material, the sintering temperature and sintering time would affect the electrical performances and cycle performance of the positive electrode active material.

The sintering temperature would have a greater impact on the performance of a material, mainly because when the sintering temperature is lower than an optimal sintering temperature, the reaction is not complete and it is easy to form an amorphous material, and the material may exhibit poor crystallization behavior and may contain an impurity phase with a negative impact on the electrochemical properties of the material. With the rise of the sintering temperature, a diffusion coefficient of materials increases, which promotes the mass transfer processes such as diffusion of ions and vacancies, and particle rearrangement, thereby being conducive to obtaining a product with high crystallinity. Therefore, an appropriate increase of the sintering temperature is beneficial to the reaction. However, too high temperature may easily result in formation of an oxygen-deficient compound and would also promote secondary recrystallization. Meanwhile, the material may have coarsened crystal grains and reduced specific surface area, which are not conducive to the intercalation and deintercalation of sodium ions in the material. Therefore, in some embodiments of the present disclosure, the sintering is carried out at a temperature of 850°C to 920°C, preferably 890°C to 910°C, more optionally 895°C to 905°C, and most optionally 900°C.

The sintering time will also affect the electrochemical properties of the material. As the sintering time increases, the ions and vacancies have enough time to undergo the mass transfer processes such as diffusion and particle rearrangement, thereby being conducive to obtaining a product with a more stable structure. Therefore, an appropriate extension of the sintering time is beneficial to the reaction. However, too long sintering time is economically disadvantageous and will not significantly improve the structural stability of the product. Therefore, in some embodiments of the present disclosure, the sintering is carried out for a period of from 15 to 25 hours, preferably from 17 to 22 hours, more preferably from 19 to 21 hours, and most preferably of 20 hours.

Any Ni source, Mn source, Na source, Fe source and M metal source known to those skilled in the art that are suitable for preparing the positive electrode active material for a secondary battery can be used in the preparation of the positive electrode active material for a sodium ion battery according to the present disclosure. In an embodiment of the present disclosure, one or more of sulfates, carbonates, metal oxides, phosphates, nitrates, metal hydroxides and metal halides may be used as raw materials.

A complexing agent may be used in the preparation of the positive electrode active material for a sodium ion battery according to the present disclosure. The complexing agent is one or more of ammonia, ammonium bicarbonate, ammonium sulfate, ammonium carbonate, citric acid and ethylenediaminetetraacetic acid (EDTA) disodium.

A precipitating agent may be used in the preparation process of the positive electrode active material for a sodium ion battery according to the present disclosure. The precipitating agent is one or more of sodium hydroxide, potassium hydroxide and lithium hydroxide.

As described above, the positive electrode active material including the O3-phase layered metal oxide according to the present disclosure has excellent structural stability and is applicable to high voltage zones.

Next, a sodium ion battery according to the second aspect of the present disclosure will be described.

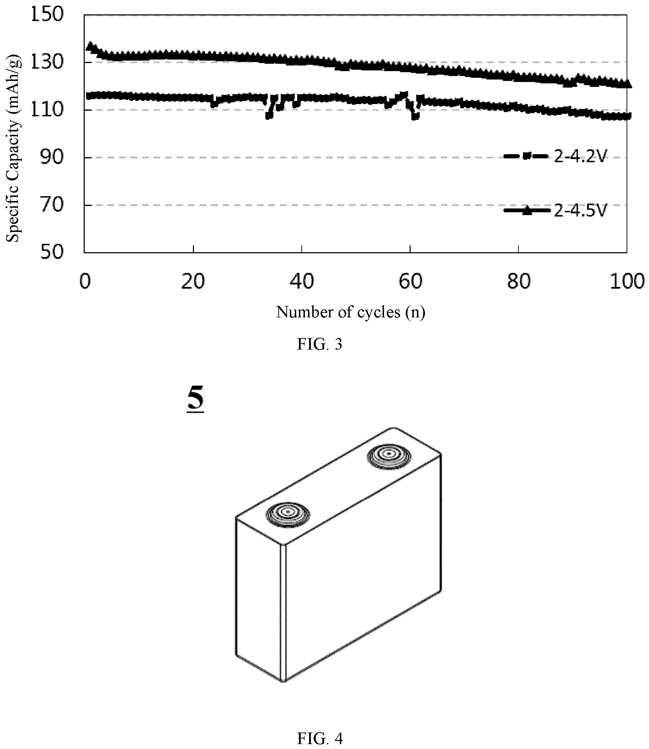

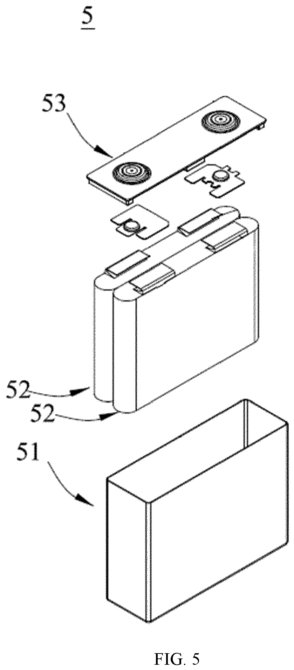

FIG. 4 is a three-dimensional diagram of a sodium ion battery 5 according to an embodiment. FIG. 5 is an exploded view of FIG. 4. With reference to FIG. 4 and FIG. 5, the sodium ion battery 5 includes a casing 51, an electrode assembly 52, a top cap assembly 53, and an electrolyte (not shown).

The electrode assembly 52 is housed in the casing 51. The number of electrode assemblies 52 is not limited, which can be one or more. The electrode assembly 52 includes a positive electrode plate, a negative electrode plate, and a separator. The positive electrode plate and the negative electrode plate are spaced apart by the separator. The electrolyte is injected into the casing 51 and the electrode assembly 52 is impregnated with the electrolyte. The electrode assembly includes, for example, a first electrode plate, a second electrode plate, and a separator.

It shall be noted that the sodium ion battery 5 shown in FIG. 4 is a canister type battery. Not limited to this, the sodium ion battery 5 may be a pouch type battery, that is, the casing 51 is replaced by a metal-plastic film and the top cap assembly 53 is omitted.

Therefore, the second aspect of the present disclosure provides a sodium ion battery, including a positive electrode plate, a negative electrode plate, a separator interposed between the positive electrode plate and the negative electrode plate, and an electrolyte, the positive electrode plate including a positive electrode current collector, and a positive electrode active material layer disposed on at least one side of the positive electrode current collector, wherein the positive electrode active material is the positive electrode active material according to the present disclosure, and wherein the battery has a charge cut-off voltage of 4.2 V or higher. The sodium ion battery has an initial specific discharge capacity of 120 mAh/g at a voltage of 2.0 V to 4.2 V, and a capacity retention of 87% or higher after 100 cycles at 1 C.

The third aspect of the present disclosure provides a sodium ion battery, including a positive electrode plate, a negative electrode plate, a separator interposed between the positive electrode plate and the negative electrode plate, and an electrolyte, the positive electrode plate including a positive electrode current collector, and a positive electrode active material layer disposed on at least one side of the positive electrode current collector, wherein the positive electrode active material is the positive electrode active material according to the present disclosure, and the battery has a charge cut-off voltage of 4.5 V or higher. The sodium ion battery has an initial specific discharge capacity of 150 mAh/g at a voltage of 2.0 V to 4.5 V, and a capacity retention of 80% or higher after 100 cycles at 1 C.

In the sodium ion battery according to the present disclosure, the positive electrode plate including the positive electrode active material has a certain compacted density. Optionally, the positive electrode plate has a compacted density (TD) of 1.5 ≤ TD ≤ 4.0, optionally 2.0 ≤ TD ≤ 4.0. Too low compacted density of an electrode plate would not be conducive to increasing the volume energy density of the electrode plate, while too high tap density would not be conductive to the full contact of the electrolyte of the material and thus not conducive to the electrochemical performance exertion of the material.

When the positive electrode active material according to the present disclosure is combined with a hard carbon negative electrode material to form a sodium ion battery, a ratio of mean particle sizes of the positive and negative electrode materials is: 0.2 < A/B < 3, optionally 0.5 < A/B < l, where A is the mean particle size of the positive electrode material, and B is the mean particle size of the negative electrode material. The smaller the mean particle size of an electrode material, the better the electronic conductivity thereof, and the better the rate capability of the sodium ion battery. However, the mean particle size of an electrode material should not be too small. If the mean particle size is too small, it will easily cause problems in the preparation processes of paste and electrode plates. In an embodiment according to the present disclosure, A/B is controlled within an appropriate range, such that superior charge and discharge performance of the battery at a high rate can be achieved. When A/B is greater than the given range, the particle size of the negative electrode material may be too small or the particle size of the positive electrode material may be too large. If the particle size of the negative electrode material is too small, the sodium ion battery may have very poor initial cycle Coulombic efficiency. If the particle size of the positive electrode material is too large, the sodium ion battery may have very poor rate capability. When A/B is less than the given range, the mean particle size of the negative electrode material may be too large or the mean particle size of the positive electrode material may be too small. If the mean particle size of the negative electrode material is too large, sodium ions cannot be intercalated in the negative electrode material completely, which may lead to the precipitation of sodium. If the mean particle size of the positive electrode material is too small, there will also be problems in the preparation processes of paste and electrode plates.

The present disclosure has no special limitation on the preparation method of the sodium ion battery, and any technical solution for preparing a sodium ion battery using a positive electrode active material that is well known to those skilled in the art may be adopted.

Next, a battery module of the fourth aspect of the present disclosure will be described.

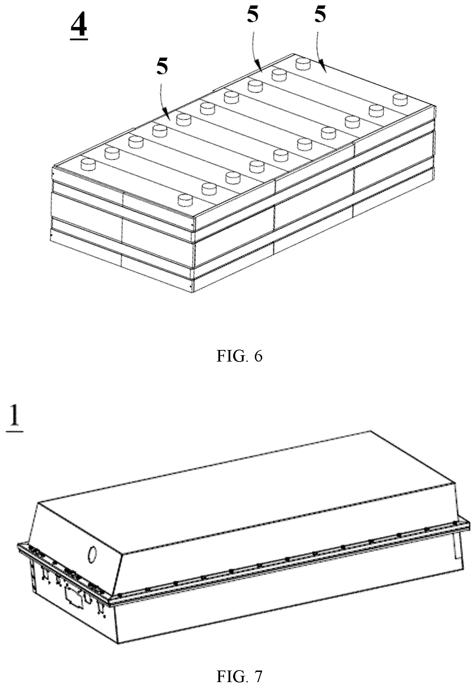

FIG. 6 is a three-dimensional diagram of a battery module 4 according to an embodiment.

The battery module 4 provided in the third aspect of the present disclosure includes the sodium ion battery 5 of the second aspect of the present disclosure.

With reference to FIG. 6, the battery module 4 includes a plurality of sodium ion batteries 5. The plurality of sodium ion batteries 5 are arranged in a longitudinal direction. The battery module 4 can be used as a power source or an energy storage device. The number of the sodium ion batteries 5 in the battery module 4 can be adjusted according to use and capacity of the battery module 4.

Next, a battery pack of the fifth aspect of the present disclosure will be described.

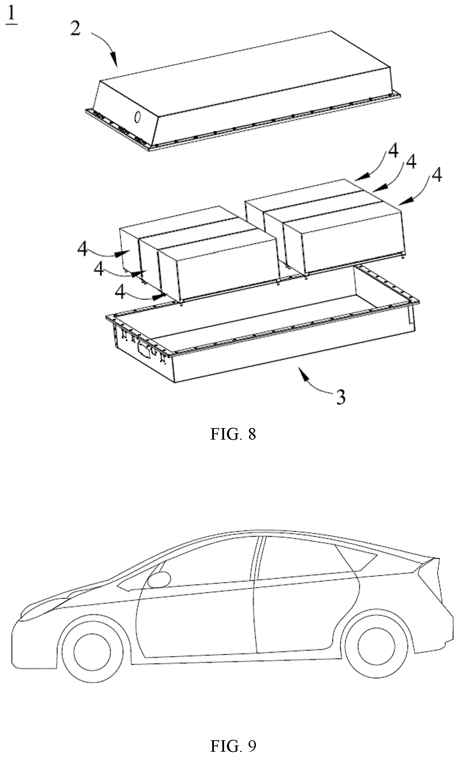

FIG. 7 is a three-dimensional diagram of a battery pack 1 according to an embodiment. FIG. 8 is an exploded view of FIG. 7.

The battery pack 1 provided in the fourth aspect of the present disclosure includes the battery module 4 of the third aspect of the present disclosure.

Specifically, with reference to FIG. 7 and FIG. 8, the battery pack 1 includes an upper case body 2, a lower case body 3, and battery modules 4. The upper case body 2 and the lower case body 3 are assembled together to form a space for housing the battery modules 4. The battery modules 4 are placed in the space formed by the upper case body 2 and the lower case body 3 assembled together. Output electrodes of the battery modules 4 are drawn out of one or both of the upper case body 2 and the lower case body 3 to supply power to the outside or receive power from the outside. The number and arrangement of the battery modules 4 used in the battery pack 1 may be determined according to actual requirements.

Next, an apparatus of the sixth aspect of the present disclosure will be described.

FIG. 9 is a schematic diagram of an apparatus with a sodium ion battery as a power source according to an embodiment.

The apparatus provided in the fifth aspect of the present disclosure includes the sodium ion battery 5 of the second aspect of the present disclosure, and the sodium ion battery 5 can be used as a power source for the apparatus. In FIG. 9, the apparatus with the sodium ion battery 5 is an electric automobile. Certainly not limited to this, the apparatus with the sodium ion battery 5 may be any other electric vehicles (such as an electric bus, a tramcar, an electric bicycle, an electric motorcycle, an electric scooter, an electric golf cart, and an electric truck) in addition to the electric automobile, an electric ship, an electric tool, an electronic device, or an energy storage system. The electric automobile may be a pure electric vehicle, a hybrid electric vehicle, or a plug-in hybrid electric vehicle. Certainly, according to the actual use form, the apparatus provided in the fifth aspect of the present disclosure may include the battery module 4 according to the third aspect of the present disclosure. Certainly, the apparatus provided in the fifth aspect of the present disclosure may include the battery pack 1 according to the fourth aspect of the present disclosure.

In one embodiment of the present disclosure, a button battery is prepared by the following process:
1. Preparation of a positive electrode plate:
   The positive electrode active material according to the present disclosure is fully mixed with conductive carbon and polyvinylidene fluoride (PVDF) as a binder at a weight ratio of 80:15:5 in an appropriate amount of N-methyl pyrrolidone (NMP) as a solvent to form a uniform positive electrode slurry. The slurry is applied to an Al foil as a positive electrode current collector, dried and then punched into a small round piece having a diameter of 14 mm.
2. Preparation of an electrolyte
   An equal volume of ethylene carbonate is dissolved in propylene carbonate, and then an appropriate amount of sodium perchlorate is evenly dissolved in the mixed solvent for later use.
3. A metal sodium plate is used as a negative electrode plate.
4. There is no special limitation on separator, and glass fiber or non-woven fabric may be used as a separator.
5. Preparation of the button battery
   The positive electrode plate, the separator and the negative electrode plate are stacked in sequence, so that the separator is disposed between the positive electrode plate and the negative electrode plate for isolation, and the prepared electrolyte is injected into the cell to complete the preparation of the button battery.

### Examples

For the sake of easy understanding of the present disclosure, the present disclosure will be further explained below by means of examples. Those skilled in the art will understand that the described examples are merely meant to help understanding of the present disclosure and should not be regarded as specific limitations to the present disclosure.

### Test Method

### X-Ray Diffraction and Data Refinement

Powder diffraction data was obtained by using a powder sample X-ray diffractometer (XRD, Bruker D8) under conditions of CuKα used as an X-ray source, a working voltage of 40 kV, and a current of 40 mA. A sample scanning angle ranged from 10 to 80 degrees, with a step of 0.02 degree. VESTA was used to construct the basic structure of the synthesized material, and then GENERAL STRUCTURE ANALYSIS SYSTEM software (GSAS) was used to refine the XRD spectrum, including adjusting atomic parameters in the structure and fitting used peak pattern parameters, instrument parameters and the like by the least square method, so that the full-spectrum weighted residual variance factor Rwp was minimized. After the refinement achieved the requirements, the structure data was exported and used for VESTA analysis and graphing.

### Grain Size

The grain size of the positive electrode active material was measured by using an X-ray diffractometer.

### Compacted Density of Positive Electrode Film

Step 1): the positive electrode film was weighed by using a standard balance, and the coating area of the positive electrode was measure by using a ruler. The mass per unit area (g/cm²) of the positive electrode film may then be calculated.

Step 2): the compacted density D of the positive electrode film was calculated by the following formula: the compacted density D (measured in g/cm³) of the positive electrode film = the mass per unit area (g/cm²) of the positive electrode film/the positive electrode film thickness (cm), where the positive electrode film thickness may be measured by using a high-qualified micrometer.

### Initial Specific Discharge Capacity of Sodium Ion Battery at High Voltage

The sodium ion battery was charged to 4.2 V at 0.1 C at 2 V to 4.2 V and allowed to stand for 2 minutes, with the charge capacity at this point being denoted as C0. The sodium ion battery was then discharged to 2 V at 0.1 C, with the discharge capacity at this point being the initial specific discharge capacity at 2 V to 4.2 V, denoted as D0.

Similarly, the sodium ion battery was charged to 4.5 V at 0.1 C at 2 V to 4.5 V and allowed to stand for 2 minutes, with the charge capacity at this point being denoted as C0. The sodium ion battery was then discharged to 2 V at 0.1 C, with the discharge capacity at this point being the initial specific discharge capacity at 2 V to 4.5 V, denoted as D1.

### Cycle Performance of Sodium Ion Battery at High Voltage

At 25°C, the sodium ion battery was firstly charged to 4.2 V with a constant current at 1 C and then discharged with a constant current at 1 C to a voltage of 2.0 V. This was a charge-discharge cycle, and the discharge capacity in this cycle was the discharge capacity at the first cycle. The sodium ion battery was subjected to a 100-cycle charge/discharge test according to the above method, and the discharge capacity at the 100th cycle was detected.

The capacity retention (%) of the sodium ion battery after 100 cycles = (the discharge capacity of the sodium ion battery at the 100th cycle/the discharge capacity of the sodium ion battery at the first cycle) × 100%.

Similarly, at 25°C, the sodium ion battery was firstly charged to 4.5 V with a constant current at 1 C and then discharged with a constant current at 1 C to a voltage of 2.0 V. This was a charge-discharge cycle, and the discharge capacity in this cycle was the discharge capacity of the first cycle. The sodium ion battery was subjected to a 100-cycle charge/discharge test according to the above method, and the discharge capacity of the 100th cycle was detected.

The capacity retention (%) of the sodium ion battery for 100 cycles = (the discharge capacity of the sodium ion battery at the 100th cycle/the discharge capacity of the sodium ion battery at the first cycle) × 100%.

### Preparation of Positive Electrode Active Material

Firstly, a nickel manganese hydroxide precursor was prepared by coprecipitation with NiSO₄·6H₂O and MnSO₄·H₂O as a Ni source and a Mn source, ammonium hydroxide as a complexing agent and NaOH as a precipitating agent. Subsequently, as shown in Table 1 below, Na₂CO₃, Fe₃O₄, a salt or oxide containing a doping element M, and the nickel manganese hydroxide precursor were fully ground and placed in a tubular furnace to be sintered at a specific temperature for a period of time, thereby obtaining a positive electrode material including an O3-phase layered metal oxide NaₐM_{b}Ni_{c}Fe_{d}MnₑO_{2±δ} as shown in Table 1.

As controls, the positive electrode active materials of Comparative Examples 1 to 4 were prepared by the above-mentioned method with the exception that the salt or oxide containing a doping element M was not used in Comparative Examples 1 to 3 and an oxide of Mg was used for doping in Comparative Example 4.

According to the above test, the positive electrode active material of the present disclosure and the positive electrode active materials as controls were measured for their I003/I104 ratio and crystal lattice parameters c/a ratio, which was summarized in Table 1 below.

### Manufacture of Sodium Ion Battery

1. Preparation of a positive electrode plate:
   The positive electrode active material according to the present disclosure was fully mixed with conductive carbon and polyvinylidene fluoride (PVDF) as a binder at a weight ratio of 80:15:5 in an appropriate amount of N-methyl pyrrolidone (NMP) as a solvent to form a uniform positive electrode slurry. The slurry was applied to an Al foil as a positive electrode current collector, dried and then punched into a small round piece having a diameter of 14 mm.
2. Preparation of an electrolyte:
   An equal volume of ethylene carbonate was dissolved in propylene carbonate, and then an appropriate amount of sodium perchlorate was evenly dissolved in a mixed solvent to form a 1 mol/L electrolyte for later use.
3. A metal sodium sheet was used as a negative electrode plate.
4. Glass fiber was used as a separator.
5. Preparation of a button battery:
   The positive electrode plate, the separator and the negative electrode plate were stacked in sequence, so that the separator was disposed between the positive electrode plate and the negative electrode plate for isolation, and the prepared electrolyte was injected into the cell to complete the preparation of the button battery.

According to the above test information, the measurement results of the initial discharge specific capacity and the cycle performance of the manufactured button battery were summarized in Table 1 below.

**Table 1: Chemical Formulas, Structural Properties and Electrical performances of O3-Phase Layered Metal Oxides**

| | Chemical formula | Salt or Oxide Containing Doping Element M | Sintering Temperature /°C | Sintering Time/h | I₀₀₃/I₁₀₄ | c/a | 1^{st} Cycle Discharge Specific Capacity [mAh/g] at 2.0-4.2 V | Capacity Retention (%) | 1^{st} Cycle Discharge Specific Capacity [mAh/g] | Capacity Retention (%) |
|---|---|---|---|---|---|---|---|---|---|---|
| | | | | | | | | after 100 Cycles at 1 C | | after 100 cycles at 1 C |
| | | | | | | | | at 2.0-4.2 V | at 2.0-4.5 V | At 2.0-4.5 V |
| Ex1 | Na_{0.85}Ti_{0.05}Ni_{0.175}Fe_{0.2}Mn_{0.525}O₂ | TiO₂ | 900 | 20 | 0.76 | 5.5 | 132 | 94.2 | 164 | 81.6 |
| Ex2 | Na_{0.85}Ti_{0.05}Ni_{0.175}Fe_{0.2}Mn_{0.525}O₂ | CuO | 900 | 20 | 0.81 | 5.52 | 132.3 | 94.4 | 164.4 | 81.9 |
| Ex3 | Na_{0.85}Ti_{0.05}Ni_{0.175}Fe_{0.2}Mn_{0.525}O₂ | CoCO₃ | 900 | 20 | 0.83 | 5.53 | 132.8 | 94.8 | 164.7 | 82.2 |
| Ex4 | Na_{0.85}Zn_{0.05}Ni_{0.175}Fe_{0.2}Mn_{0.525}O₂ | ZnO | 900 | 20 | 0.85 | 5.56 | 133 | 95.2 | 165 | 82.4 |
| Ex5 | Na_{0.85}Zn_{0.1}Ni_{0.175}Fe_{0.2}Mn_{0.525}O₂ | Li₂CO₃ | 900 | 20 | 0.87 | 5.58 | 133.5 | 95.5 | 165.3 | 83.8 |
| Ex6 | Na_{0.85}Zn_{0.1}Ni_{0.175}Fe_{0.2}Mn_{0.525}O₂ | Li₂CO₃ | 860 | 20 | 0.79 | 5.08 | 120.6 | 88.4 | 152.4 | 82.4 |
| Ex7 | Na_{0.85}Zn_{0.1}Ni_{0.175}Fe_{0.2}Mn_{0.525}O₂ | Li₂CO₃ | 900 | 15 | 0.62 | 5 | 120.4 | 87.6 | 152.2 | 80.4 |
| Ex8 | Na_{0.85}Zn_{0.1}Ni_{0.175}Fe_{0.2}Mn_{0.525}O₂ | Li₂CO₃ | 900 | 17 | 0.76 | 5.26 | 125.7 | 89.7 | 157.5 | 81.3 |
| Ex9 | Na_{0.85}Zn_{0.1}Ni_{0.175}Fe_{0.2}Mn_{0.525}O₂ | Li₂CO₃ | 900 | 22 | 1.13 | 5.63 | 127.8 | 93.4 | 159.6 | 83.2 |
| Ex10 | Na_{0.85}Zn_{0.1}Ni_{0.175}Fe_{0.2}Mn_{0.525}O₂ | Li₂CO₃ | 900 | 25 | 1.5 | 5.71 | 120.6 | 90.2 | 152.4 | 82.3 |
| CEx1 | Na_{0.9}Ni_{0.3}Mn_{0.4}F_{0.3}O₂ | - | 900 | 20 | 0.61 | 5.48 | 140 | 70.3 | 170 | 54.2 |
| CEx2 | Na_{0.9}Ni_{0.3}Mn_{0.4}F_{0.3}O₂ | - | 900 | 15 | 0.49 | 5.32 | 131.6 | 68.1 | 164.2 | 52.7 |
| CEx3 | NaNi_{0.25}Mn_{0.5}Fe_{0.25}O₂ | - | 930 | 24 | 0.49 | 5.48 | 148 | 54.1 | 180 | 41.6 |
| CEx4 | NaMg_{0.1}Ni_{0.3}Fe_{0.1}Mn_{0.5}O₂ | MgO | 900 | 6 | 0.49 | 5.57 | 137.8 | 62.4 | 158 | 47.8 |

From the data in Table 1 above, it can be seen that the doping elements in the positive electrode active materials in the form of the O3-phase layered metal oxides had a significant effect on the structural properties of the positive electrode active materials, such as crystallinity and antisite defect of sodium cation. In addition, the sintering temperature and time of the positive electrode active materials would also have an impact on the structural properties, which would further affect the electrochemical performances of sodium ion batteries, especially the high-voltage discharge specific capacity and high-voltage cycle performance.

As could be seen from the I(003)/I(104) ratio changes of Examples 1 to 5 and Comparative Examples 1 to 3 in Table 1, compared with the undoped O3-Na_{0.9}Ni_{0.3}Mn_{0.4}Fe_{0.3}O₂, the doped and modified O3-Na_{0.85}M_{b}Ni_{0.175}Fe_{0.2}Mn_{0.525}O₂ materials had more excellent structural stability, and thus exhibited excellent comprehensive electrochemical performances, especially in high voltage zones. Therefore, the materials would have a great potential application value as positive electrode materials for sodium ion batteries.

Moreover, as could be seen from the I(003)/I(104) ratio changes of Examples 1 to 5 and Comparative Example 4 in Table 1, compared with the O3-Na_{0.9}Ni_{0.3}Mn_{0.4}Fe_{0.3}O₂ doped with Mg, the O3-Na_{0.85}M_{b}Ni_{0.175}Fe_{0.2}Mn_{0.525}O₂ materials doped and modified with specific metals had more excellent structural stability, and thus exhibited excellent comprehensive electrochemical performances, especially in high voltage zones, which would be unexpected prior to the present disclosure.

In addition, the sintering temperature and the sintering time would also have a certain impact on the structural properties including the crystallization behavior and the antisite defect of sodium cation of the positive electrode active material of the positive electrode active material and the electrical performances including high-voltage discharge specific capacity and high-voltage cycle performance of the sodium ion battery. Sintering at 900°C for 20 hours resulted in formation of the positive electrode active material having the optimal properties.

Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

The present invention also provides the following aspects.
1. A positive electrode active material for a sodium ion battery, mainly comprising an O3-phase layered metal oxide having the following molecular formula:

   NaₐM_{b}Ni_{c}Fe_{d}MnₑO_{2±δ} (Formula I)

   in which
   M is a metal cation different from Ni, Fe and Mn; 0.67 < a < 1.1; 0 < b < 0.25, optionally 0.05 < b < 0.15; 0 < c < 0.3, optionally 0.05 < c < 0.25; 0 < b+c < 0.55, 0.45 < d+e < 1, and b+c+d+e = l; and 0 ≤ δ ≤ 0.1,
   wherein the metal cation is at least one selected from Li⁺, Cu²⁺, Zn²⁺, Co²⁺ and Ti⁴⁺.
2. The positive electrode active material for a sodium ion battery according to 1, wherein the O3-phase layered metal oxide has a ratio of I(003)/I(104) of ≥ 0.62, optionally between 0.67 and 1.5, in an X-ray diffraction spectrum, wherein I(003) denotes a peak intensity of the (003) crystal plane of the O3-phase layered metal oxide, while I(104) denotes a peak intensity of the (104) crystal plane of the O3-phase layered metal oxide, and I(003)/I(104) reflects an antisite defect of sodium metal cation in the O3-phase layered metal oxide.
3. The positive electrode active material for a sodium ion battery according to 1 or 2, wherein the O3-phase layered metal oxide has a hexagonal crystal system with a space group specified by R3m, wherein a ratio of crystal lattice parameter c to crystal lattice parameter a is greater than or equal to 5, optionally greater than or equal to 5.5.
4. The positive electrode active material for a sodium ion battery according to any one of 1 to 3, wherein the O3-phase layered metal oxide has a ratio of I(003)/I(104) of ≥ 0.62, optionally between 0.67 and 1.5, in the X-ray diffraction spectrum, and the O3-phase layered metal oxide has a hexagonal crystal system with a space group specified by R3m, wherein a ratio of crystal lattice parameter c to crystal lattice parameter a is greater than or equal to 5, optionally greater than or equal to 5.5.
5. The positive electrode active material for a sodium ion battery according to any one of 1 to 4, wherein primary particles of the O3-phase layered metal oxide have a flaky structure.
6. The positive electrode active material for a sodium ion battery according to 5, wherein the primary particles have a grain size between 0.05 and 15 microns, optionally between 0.1 and 5 microns.
7. The positive electrode active material for a sodium ion battery according to any one of 1 to 6, wherein the positive electrode active material has a compacted density between 1.5 g/cm³ and 4.5 g/cm³, optionally between 2.5 g/cm³ and 4 g/cm³, under a pressure of 8 tons.
8. The positive electrode active material for a sodium ion battery according to any one of 1 to 7, wherein the positive electrode active material is obtained by the following steps:
   i) coprecipitating a Ni source and a Mn source in the presence of a complexing agent and a precipitating agent to obtain a Ni-Mn metal salt percuros, and
   ii) carrying out a solid phase sintering to the Ni-Mn metal salt precursor from the step i) together with a Na source, a Fe source and an M source, so as to obtain the positive electrode active material comprising the O3-phase layered metal oxide.
9. The positive electrode active material for a sodium ion battery according to 8, wherein the sintering is carried out at a temperature of 850°C to 920°C, preferably 890°C to 910°C, more preferably 895°C to 905°C, and most preferably 900°C.
10. The positive electrode active material for a sodium ion battery according to 8 or 9, wherein the sintering is carried out for a period of from 15 to 25 hours, preferably from 17 to 22 hours, more preferably from 19 to 21 hours, and most preferably 20 hours.
11. A sodium ion battery, comprising a positive electrode plate, a negative electrode plate, a separator disposed between the positive electrode plate and the negative electrode plate, and an electrolyte, wherein the positive electrode plate comprises a positive electrode current collector, and a positive electrode active material layer disposed on at least one side of the positive electrode current collector, wherein the positive electrode active material is the positive electrode active material according to any one of 1 to 10, and wherein the battery has a charge cut-off voltage of 4.2 V or higher.
12. The sodium ion battery according to 11, wherein the battery has an initial specific discharge capacity of 120 mAh/g at a voltage of 2.0 V to 4.2 V, and a capacity retention of 87% or higher after 100 cycles at 1 C.
13. A sodium ion battery, comprising a positive electrode plate, a negative electrode plate, a separator interposed between the positive electrode plate and the negative electrode plate, and an electrolyte, wherein the positive electrode plate comprises a positive electrode current collector, and a positive electrode active material layer disposed on at least one side of the positive electrode current collector, wherein the positive electrode active material is the positive electrode active material according to any one of 1 to 10, and wherein the battery has a charge cut-off voltage of 4.5 V or higher.
14. The sodium ion battery according to 13, wherein the battery has an initial specific discharge capacity of 150 mAh/g at a voltage of 2.0 V to 4.5 V, and a capacity retention of 80% or higher after 100 cycles at 1 C.
15. A battery module, comprising the sodium ion battery according to any one of 11 and 12 or according to any one of 13 and 14.
16. A battery pack, comprising the battery module according to 15.
17. An apparatus, comprising the sodium ion battery according to any one of 11 and 12 or according to any one of 13 and 14, wherein the sodium ion battery serves as a power source or an energy storage unit of the apparatus; optionally, the apparatus comprises an electric vehicle, a hybrid electric vehicle, a plug-in hybrid electric vehicle, an electric bicycle, an electric scooter, an electric golf cart, an electric truck, an electric ship, or an energy storage system.

Although the present disclosure is described with reference to a large number of embodiments and examples, those of ordinary skill in the art can recognize that other embodiments can be designed based on the contents of the present disclosure, which does not depart from the protection scope and spirit of the present disclosure.

## Claims

1. A positive electrode active material for a sodium ion battery, mainly comprising an O3-phase layered metal oxide having the following molecular formula:
NaₐM_{b}Ni_{c}Fe_{d}MnₑO_{2±δ} (Formula I)
in which
M is a metal cation different from Ni, Fe and Mn; 0.67 < a < 1.1; 0 < b < 0.25; 0 < c < 0.3; 0 < b+c < 0.55, 0.45 < d+e < 1, and b+c+d+e = l; and 0 ≤ δ ≤ 0.1,
wherein the metal cation is Li⁺,
wherein the O3-phase layered metal oxide has a ratio of I(003)/I(104) between 0.9 and 1.5, in an X-ray diffraction spectrum, wherein I(003) denotes a peak intensity of the (003) crystal plane of the O3-phase layered metal oxide, while I(104) denotes a peak intensity of the (104) crystal plane of the O3-phase layered metal oxide, and I(003)/I(104) reflects an antisite defect of sodium metal cation in the O3-phase layered metal oxide.

2. The positive electrode active material for a sodium ion battery according to claim 1, wherein the O3-phase layered metal oxide has a hexagonal crystal system with a space group specified by R3m, wherein a ratio of crystal lattice parameter c to crystal lattice parameter a is greater than or equal to 5, optionally greater than or equal to 5.5.

3. The positive electrode active material for a sodium ion battery according to any one of claims 1 to 2, wherein primary particles of the O3-phase layered metal oxide have a flaky structure.

4. The positive electrode active material for a sodium ion battery according to claim 3, wherein the primary particles have a grain size between 0.05 and 15 microns, optionally between 0.1 and 5 microns.

5. The positive electrode active material for a sodium ion battery according to any one of claims 1 to 4, wherein the positive electrode active material has a compacted density between 1.5 g/cm³ and 4.5 g/cm³, optionally between 2.5 g/cm³ and 4 g/cm³, under a pressure of 8 tons.

6. A process for the preparation of the positive electrode active material for a sodium ion battery according to any one of claims 1 to 5, comprising the following steps:
i) coprecipitating a Ni source and a Mn source in the presence of a complexing agent and a precipitating agent to obtain a Ni-Mn metal salt percuros, and
ii) carrying out a solid phase sintering to the Ni-Mn metal salt precursor from the step i) together with a Na source, a Fe source and an M source, so as to obtain the positive electrode active material comprising the O3-phase layered metal oxide.

7. The process according to claim 6, wherein the sintering is carried out at a temperature of 850°C to 920°C, preferably 890°C to 910°C, more preferably 895°C to 905°C, and most preferably 900°C.

8. The process according to claim 6 or 7, wherein the sintering is carried out for a period of from 15 to 25 hours, preferably from 17 to 22 hours, more preferably from 19 to 21 hours, and most preferably 20 hours.

9. A sodium ion battery, comprising a positive electrode plate, a negative electrode plate, a separator disposed between the positive electrode plate and the negative electrode plate, and an electrolyte, wherein the positive electrode plate comprises a positive electrode current collector, and a positive electrode active material layer disposed on at least one side of the positive electrode current collector, wherein the positive electrode active material is the positive electrode active material according to any one of claims 1 to 5 or the positive electrode active material prepared by the process according to any one of claims 6-8, and wherein the battery has a charge cut-off voltage of 4.2 V or higher.

10. An apparatus, comprising the sodium ion battery according to claim 9, wherein the sodium ion battery serves as a power source or an energy storage unit of the apparatus; optionally, the apparatus comprises an electric vehicle, a hybrid electric vehicle, a plug-in hybrid electric vehicle, an electric bicycle, an electric scooter, an electric golf cart, an electric truck, an electric ship, or an energy storage system.
